# EUROPEAN PATENT APPLICATION

(11) **EP 4 414 921 A1**
(43) Date of publication of application: **14.08.2024**
(21) Application number: 23155680.4
(22) Date of filing: 08.02.2023
(51) Int. Cl.: G06Q 20/02, G06Q 20/40, G06Q 20/20

(54) **OPEN BANKING RISK MANAGEMENT**

(71) Applicant: Mastercard International Incorporated, Purchase, NY 10577 (US)
(72) Inventor: HOSNY, Ahmed, Dublin, D18 (IE)
(74) Representative: Keltie LLP

(57) **Abstract**

A method of managing an account to account transaction in an Open Banking transaction architecture is described. An account to account transaction from a payment initiating institution is received. A recipient for the transaction is identified, and transaction controls applicable to the recipient relevant to the transaction are determined. The transaction controls are then applied to determine whether the transaction complies with the transaction controls. If the transaction does not comply with the transaction controls, the payment initiation institution is notified that the transaction is rejected. If the transaction does comply with the transaction controls, the transaction is forwarded to an account holding institution for a payor for the transaction. Computing apparatus suitable to implement this method is also described.

## Description

### TECHNICAL FIELD

The present disclosure relates to Open Banking risk management.

### BACKGROUND

Open Banking is a relatively new, but rapidly growing, banking paradigm. Generally, Open Banking involves the use of open APIs that enable third-party developers to build applications and services around a financial institution, and it provides greater financial transparency and data control options for account holders, ranging from open data to private data. This approach is consistent with provision of Banking as a Service (BaaS) and Banking as a Platform (BaaP) technologies. In many implementations, open source technology is used to provided Open Banking implementations, and in many jurisdictions or regions, some form of regulation or standardisation is used to control usage or to set expectations (for example, the EU Payment Services Directive PSD2 establishes requirements for EU operation, and the UK adopts standardisation managed by a designated non-profit, Open Banking Limited).

Management of Open Banking transactions raises different risk management and technical issues from those arising in existing payment networks, such as the payment network infrastructure of payment card providers. In such cases, issuing banks provide account services to cardholders and acquiring banks provide account services to merchants - in both cases, the bank has relatively detailed knowledge of the transaction, and there are good opportunities for both parties to evaluate the transaction (or to have another party associated with the payment network to evaluate the transaction on their behalf), so either bank can block a transaction that creates unacceptable risk. The payment network can also intervene to block payments across different issuers/acquirers providing an additional level of security.

This is not achievable in the same way for an Open Banking transaction, and this creates specific risks for acquiring banks in particular. An Open Banking transaction between a consumer and a merchant will most easily be implemented as an A2A (Account to Account) transaction. While these have long been used for making direct payments between individuals in conventional banking systems, they lack the detailed description of the transaction found in, say, an EMV transaction, and under the Open Banking paradigm it is not appropriate for the payee to demand further details from the payor. It is consequently very difficult for an acquiring bank to ensure that its merchant clients are managing risk acceptably (or even to ensure that there has not been abuse of such payments by rogue merchants).

The present disclosure has been devised to mitigate or overcome at least some of the above-mentioned problems.

### SUMMARY OF THE DISCLOSURE

According to a first aspect of the present disclosure there is provided a computer-implemented method of managing an account to account transaction in an Open Banking transaction architecture, the method comprising: receiving an account to account transaction from a payment initiating institution; identifying a recipient for the transaction, and determining transaction controls applicable to the recipient relevant to the transaction; applying the transaction controls to determine whether the transaction complies with the transaction controls; and notifying the payment initiation institution that the transaction is rejected if the transaction does not comply with the transaction controls, and forwarding the transaction to an account holding institution for a payor for the transaction if the transaction does comply with the transaction controls.

Using this approach, an acquiring bank can ensure that its clients are managing risk acceptably, as transaction controls can be designed to impose a desired risk management philosophy. Consequently, an A2A transaction for Open Banking can be brought into the same risk management category as an EMV transaction.

The transaction controls may comprise single payment controls. Such single payment controls may comprise one or more of: an on/off control for allowing or blocking any single transaction; a threshold amount control; a time of day control and an allowed financial institution control.

The transaction controls may comprise velocity controls relating to aggregated transactions over a determined time period. Such velocity controls may comprise one or more of: an aggregated amount control relating to an aggregated value of transactions performed by the recipient; and an aggregated volume control relating to an aggregated number of transactions performed by the recipient. In embodiments, one or more of the velocity controls may relate to transactions with a specified financial institution.

In embodiments, the recipient for the transaction may be a merchant, and the transaction controls can then be merchant controls. The payor may then be a consumer. In such cases - in an Open Banking environment - the identity of the payor may not be not known when the transaction controls are applied.

In a second aspect, there is provided computing apparatus adapted to manage an account to account transaction in an Open Banking transaction architecture, the computing apparatus comprising a processor, a memory and a communications interface, wherein the processor is programmed to instruct the computing apparatus to perform the method of the first aspect.

Such computing apparatus may be programmed to perform as a payment initiation service for use in an Open Banking architecture.

### BRIEF DESCRIPTION OF THE DRAWINGS

One or more embodiments of the disclosure will now be described, by way of example only, with reference to the accompanying drawings, in which:
Figure 1 shows a transaction ecosystem adapted to implement an Open Banking paradigm;
Figure 2 illustrates schematically interactions in an Open Banking A2A (Account to Account) transaction;
Figure 3 illustrates schematically a transaction ecosystem adapted to implement an Open Banking paradigm according to an embodiment of the disclosure;
Figure 4 indicates at high level the functionality provided by the system of Figure 4;
Figure 5 indicates elements of a Payment Initiation Service suitable for use in the arrangement of Figure 3;
Figure 6 illustrates a transaction flow according to an embodiment of the disclosure; and
Figure 7 indicates computing apparatus suitable for implementing the Payment Initiation Service of Figure 5.

### DETAILED DESCRIPTION

General and specific embodiments of the disclosure will be described below with reference to the Figures.

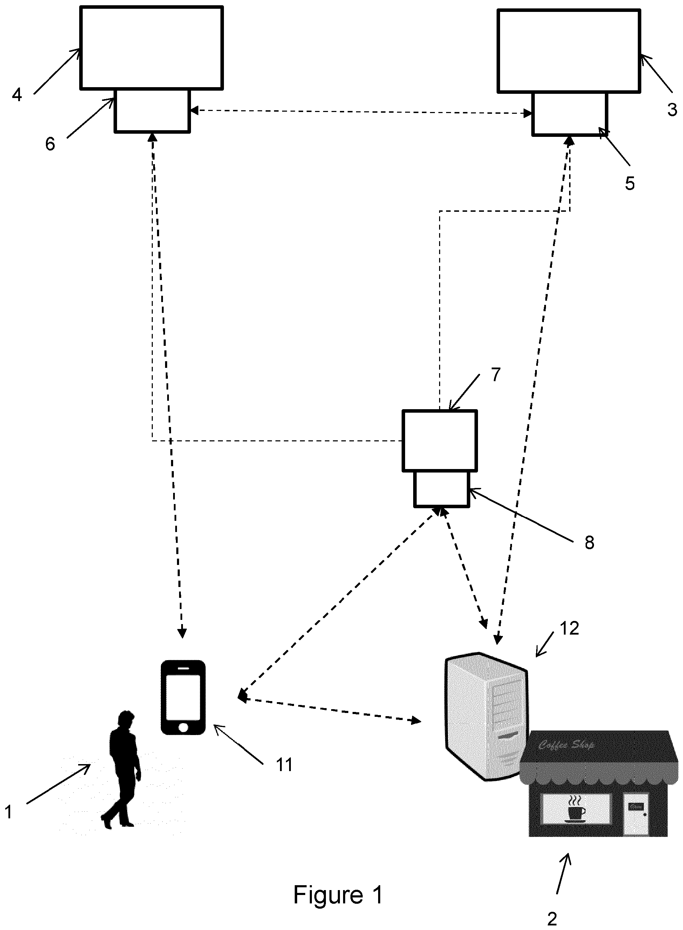

Figure 1 shows an architecture according to an embodiment of the disclosure appropriate for interaction between a user 1 - here transacting through a computing device such as a cell phone handset 11 - and a merchant 2, transacting through their computing system 12, in some embodiments with the assistance of a payment service provider 7.

The user 1 uses their computing device - which may be for example a cellular telephone handset, a tablet, a laptop, or any other suitable computing device - as the means to initiate a transaction using their bank account. This account is with issuing bank 4, who interacts with Open Banking clients through an Open Banking interface 6. The merchant 2 transacts through their computing system 12 or through an intermediary such as a payment service provider 7 with the support of their acquiring bank 3, which also has an open banking interface 5. The payment service provider 7 is also shown here with its open banking interface 8 - note that the payment service provider in practice will connect with the issuing bank 4 to get account details and to initiate a transaction.

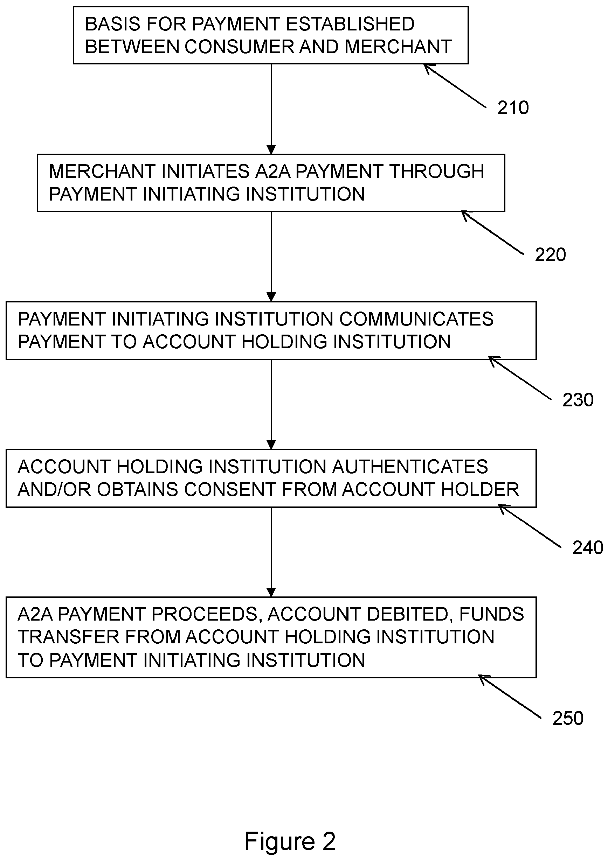

The course of an A2A transaction can most easily be seen from Figures 1 and 2 considered together. First of all the basis for payment is established 210 between the consumer 1 (through their computing device 11) and the merchant 2 (through their computer 12). The merchant 2 then initiates 220 payment through their payment initiation institution, which is their acquiring bank 3 (or payment service provider 7) acting through its Open Banking interface 5. This payment initiation is then communicated 230 to the account holding institution - here, the issuing bank 4 where the consumer 1 holds their account, acting through its Open Banking interface. The issuing bank 4 authenticates 240 the consumer 1 as account holder and obtains such user consent as is required for the transaction, after which the transaction proceeds 250 and funds are transferred from the issuing bank 4 to the acquiring bank 3 with the consumer account with the issuing bank 4 debited accordingly,

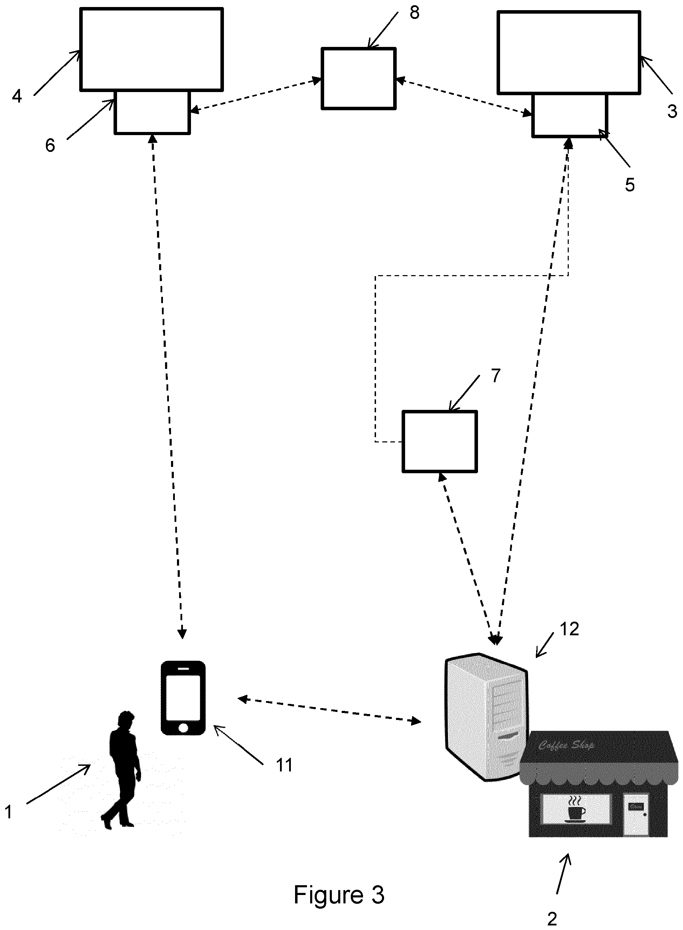

Figure 3 shows a modification to the architecture of Figure 1 adapted for implementation of embodiments of the disclosure. In this modification, there is an additional identity - a payment initiation service 8. A payment initiation service is a known type of entity within Open Banking - this is a service provided by third parties to provide Open Banking payment services for account holders - but in the architecture shown here, the payment initiation service 8 has additional capabilities that enable effective control and risk management of A2A transactions for merchants.

The payment initiation service 8 will here be implemented by a suitably programmed computer

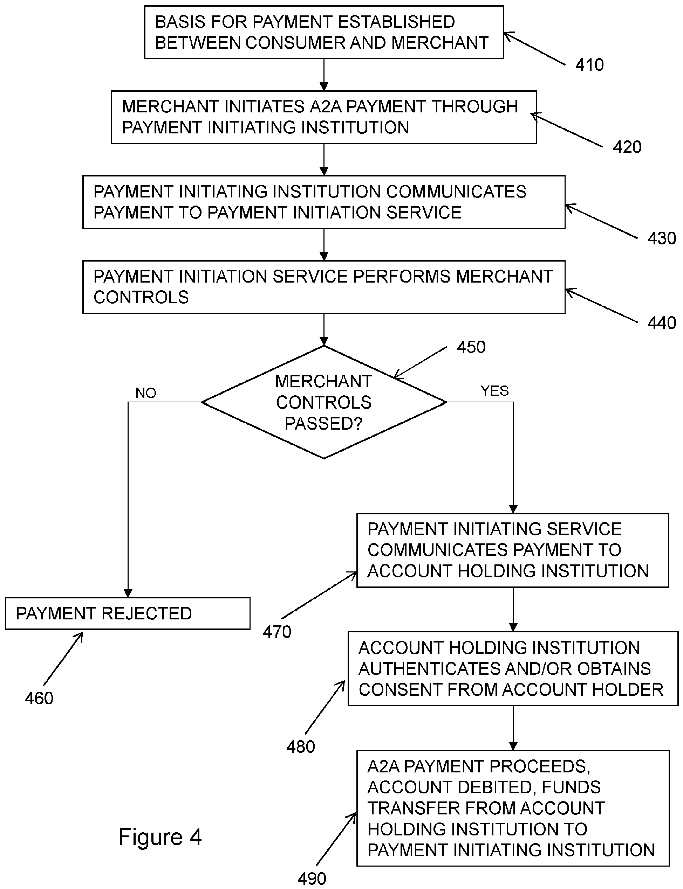

The modified A2A process is shown in Figure 4. There is no change to the process shown in Figure 2 initially - basis for payment is established between consumer and merchant 410, and the merchant initiates an A2A payment through its payment initiating institution 420 - but at that point the process diverges, as the payment initiating institution communicates the transaction to the payment initiation service 430, initially to perform merchant controls 440. On evaluating 450 the merchant controls, the payment is rejected 460 directly if these are failed and the transaction is communicated as rejected to the merchant without even being forwarded for authorisation. However, if the merchant controls are passed, the payment initiation service communicates 470 the payment to the account holding institution, which performs authentication 480 and/or obtains consent from the account holder as appropriate to the transaction. If authentication is successful and/or consent is obtained, funds are transferred 490 from the account holding institution to the payment initiating institution to settle the A2A transaction.

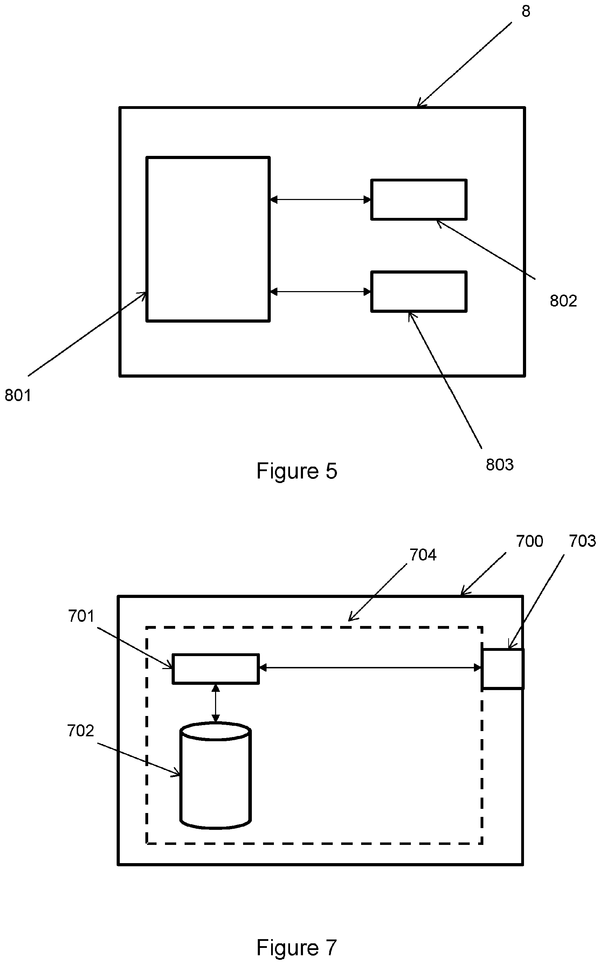

Figure 5 shows the capabilities of the payment initiation service 8 in more detail. The payment initiation service 8 here comprises three main processes - a main Open Banking PIS process 801, a rules engine 802 and a velocities engine 803. The Open Banking PIS process 801 controls the overall process performed by the payment initiation service 8, and deals with receiving and routing transactions for processing, determining merchant information for the transaction, and carrying out the merchant control process appropriate to that merchant. In doing this, the Open Banking PIS process 801 is supported by the rules engine 802 and the velocities engine 803. The rules engine 802 generally establishes and implements controls that relate to any single payment for that merchant - these may include:
On/off control (this can simply disable any payment to the merchant if triggered - for example, if fraud is suspected;
Amount control (there may be a payment limit in place for a merchant;
Time of Day control - incoming payments to the merchant may not be allowed at particular times of day, for example outside business hours; and
Allowed Financial Institutions - payments may only be allowed with certain financial institutions - here, account holding institutions (the end account holder, as this is Open Banking, may be unknown).

By contrast, the velocities engine 803 prevents certain transaction volumes from being exceeded over a defined period - these may include the following:
Aggregated Transaction Amounts - this is triggered if the total incoming transactions to a merchant exceed a predetermined total amount in a predetermined period;
Aggregated Transaction Volumes - similarly, this is triggered if the total number of incoming transactions to a merchant exceed a predetermined total number in a predetermined period; and
Aggregation by Financial Institution - this is triggered if the total transactions between the merchant and a specific financial institution exceed a predetermined total amount or a predetermined transaction volume in a predetermined period.

Services of this kind are known in payment networks which operate their own communication infrastructure separate from the Internet, also known as "payment rails," that is used for transmission of transaction messages. Payment rails provide a safe and trusted infrastructure to use for payment transactions but can sometimes pose a high barrier for entry for a new entity - Open Banking, which typically uses the public internet with APIs for different participating entities, does not have such barriers for entry, but lacks advantages that can be provided by using a controlled environment such as payment rails of a payment network. In such payment network, it is relatively straightforward to route transactions - for example, in the additional path to authorisation - so that the payment network service provider or an associated entity can provide added value services such as performance of merchant controls or other services that rely on monitoring of transaction flows.

The payment initiation service 8 as for other elements in the system implementing the stages of the transaction - may in practice be implemented by a suitably programmed computing device 700 (or combination of devices), as is shown in Figure 7. A processor 701 and a memory 702 together define a computing environment 704, typically defined by an operating system adapted for the running of applications. The computing device 700 also has a communications interface 703 adapted to allow network connections so that the computing device 700 can both send and received network messages.

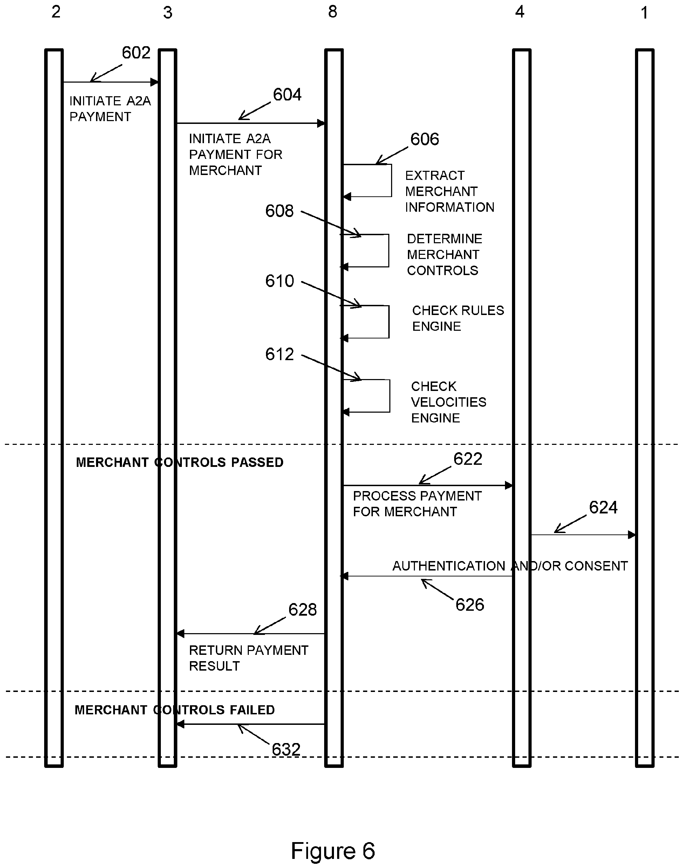

Figure 6 indicates the transaction flow of Figure 4 in greater detail with respect to the different entities involved in the process, starting after the consumer 1 and the merchant 2 have contracted to make an A2A transaction. The merchant 2 initiates 602 the account to account payment by providing a suitable message to their payment initiating institution 3, who then in this implementation messages 604 the Open Banking payment initiation service 8 to initiate the transaction, rather than simply communicating directly with the account holding institution 4 as for a conventional A2A transaction. The payment initiating service 8 establishes whether it is acceptable for the merchant 2 to proceed with the transaction. It does this by extracting 606 merchant details from the transaction details, checking 608 the merchant controls applying to that merchant, and then applying them by use of the rule engine to determine 610 whether there are any transaction-related reasons to block the transaction for that merchant and by use of the velocities engine to determine 612 whether there are any velocity-related reasons to block the transaction for that merchant. At this point, the transaction flow diverges. If the merchant controls are passed, the payment initiation service 8 continues to process the transaction by notifying 622 the account holding institution 4 for the consumer 1, at which point the transaction proceeds as for a conventional A2A transaction - the account holding institution 4 takes whatever steps that it needs to take to establish that the payment can be made by the consumer 1 (which may include 624, 626 one or both of authentication of the user and obtaining consent to the transaction from the consumer), and then notifies 628 the payment initiation service 8 of the result, which in turn notifies 630 the payment initiating institution. If the merchant controls are failed, the payment initiation service 8 simply notifies 632 the payment initiation institution to advise that the transaction cannot proceed.

Many modifications may be made to the above examples without departing from the scope of the present disclosure as defined in the accompanying claims.

## Claims

1. A computer-implemented method of managing an account to account transaction in an Open Banking transaction architecture, the method comprising:
receiving an account to account transaction from a payment initiating institution;
identifying a recipient for the transaction, and determining transaction controls applicable to the recipient relevant to the transaction;
applying the transaction controls to determine whether the transaction complies with the transaction controls; and
notifying the payment initiation institution that the transaction is rejected if the transaction does not comply with the transaction controls, and forwarding the transaction to an account holding institution for a payor for the transaction if the transaction does comply with the transaction controls.

2. The method of claim 1, wherein the transaction controls comprise single payment controls.

3. The method of claim 2, wherein the single payment controls comprise one or more of: an on/off control for allowing or blocking any single transaction; a threshold amount control; a time of day control and an allowed financial institution control.

4. The method of any preceding claim, wherein the transaction controls comprise velocity controls relating to aggregated transactions over a determined time period.

5. The method of claim 4, wherein the velocity controls comprise one or more of: an aggregated amount control relating to an aggregated value of transactions performed by the recipient; and an aggregated volume control relating to an aggregated number of transactions performed by the recipient.

6. The method of claim 5, wherein one or more of the velocity controls relates to transactions with a specified financial institution.

7. The method of any preceding claim, wherein the recipient for the transaction is a merchant, and the transaction controls are merchant controls.

8. The method of claim 7, wherein the payor is a consumer.

9. The method of claim 8, wherein the identity of the payor is not known when the transaction controls are applied.

10. Computing apparatus adapted to manage an account to account transaction in an Open Banking transaction architecture, the computing apparatus comprising a processor, a memory and a communications interface, wherein the processor is programmed to instruct the computing apparatus to perform the method of any of claims 1 to 9.

11. Computing apparatus according to claim 10, wherein the computing apparatus is programmed to perform as a payment initiation service for use in an Open Banking architecture.
